# EUROPÄISCHE PATENTSCHRIFT

(11) **EP 3 746 723 B1**
(45) Veröffentlichungstag und Bekanntmachung des Hinweises auf die Patenterteilung: **06.03.2024**
(21) Anmeldenummer: 19704716.0
(22) Anmeldetag: 29.01.2019
(51) Int. Cl.: F25B 21/00

(54) **VORRICHTUNG UND VERFAHREN ZUM BILDEN EINES TEMPERATURGRADIENTEN**
APPARATUS AND METHOD FOR ESTABLISHING A TEMPERATURE GRADIENT
DISPOSITIF ET PROCÉDÉ POUR FORMER UN GRADIENT DE TEMPÉRATURE

(30) Priorität: 30.01.2018 AT 500862018
(43) Veröffentlichungstag der Anmeldung: 09.12.2020
(73) Patentinhaber: Böhm, Gerald, 3830 Waidhofen an der Thaya (AT); Hirschmanner, Rudolf, 8330 Feldbach (AT); Maierhofer, Siegfried, 8641 St. Marein im Mürztal (AT)
(72) Erfinder: Böhm, Gerald, 3830 Waidhofen an der Thaya (AT); Hirschmanner, Rudolf, 8330 Feldbach (AT); Maierhofer, Siegfried, 8641 St. Marein im Mürztal (AT)
(74) Vertreter: Wirnsberger & Lerchbaum Patentanwälte OG
(86) Internationale Anmeldenummer: PCT/AT2019/060036
(87) Internationale Veröffentlichungsnummer: WO 2019/148226

(56) Entgegenhaltungen:
- WO-A2-2007/100941
- AT-A1- 512 577
- AT-A1- 514 110
- US-A1- 2006 130 489
- US-A1- 2006 138 896

## Beschreibung

Die Erfindung betrifft eine Vorrichtung zum Bilden eines Temperaturgradienten, aufweisend zumindest einen gasdichten Arbeitsraum mit einer ersten Begrenzungsfläche, welche mit einer ersten Elektrode verbunden ist, und einer zweiten Begrenzungsfläche, welche mit einer zweiten Elektrode verbunden ist, wobei bei Anlegen einer elektrischen Spannung zwischen erster Elektrode und zweiter Elektrode im Arbeitsraum ein elektrisches Feld zwischen erster Begrenzungsfläche und zweiter Begrenzungsfläche erzeugbar ist und wobei ein Abstand zwischen erster Begrenzungsfläche und zweiter Begrenzungsfläche kleiner als 5000 nm ist.

Weiter betrifft die Erfindung ein Verfahren zum Bilden eines Temperaturgradienten mit einer Vorrichtung, welche einen gasdichten Arbeitsraum mit einer ersten Begrenzungsfläche und einer zweiten Begrenzungsfläche aufweist, mittels eines im Arbeitsraum befindlichen Arbeitsgases, an dem ein elektrisches Feld anliegt.

Ferner betrifft die Erfindung ein Verfahren zum Übertragen elektrischer Energie.

Aus dem Stand der Technik sind eine Vorrichtung und ein Verfahren der eingangs genannten Art zum Bilden eines Temperaturgradienten bekannt geworden. Insbesondere das Dokument AT 512 577 A1 offenbart ein Verfahren zum Bilden eines Temperaturgradienten sowie eine Vorrichtung hierzu, wobei Moleküle bzw. Atome eines Arbeitsgases in einem Arbeitsraum zwischen einer Anode und einer Kathode pendeln, wobei die Moleküle bei einer Bewegung gegen das elektrische Feld abkühlen, bevor diese die Anode erreichen. Somit wird an der Anode thermische Energie an die Moleküle übergeben, wonach die Moleküle in Richtung der Kathode bewegt werden, wobei diese am Weg zur Kathode über das elektrische Feld Energie aufnehmen, sodass die Moleküle bei einem Kontakt mit der Kathode Energie an die Kathode abgeben können.

Als nachteilig bei diesem Verfahren hat sich erwiesen, dass nur eine sehr geringe Energiemenge zwischen Anode und Kathode übertragbar ist.

Hier setzt die Erfindung an. Aufgabe der Erfindung ist es, eine Vorrichtung der eingangs genannten Art anzugeben, mit welcher größere Energiemengen übertragbar bzw. ein höherer Temperaturgradient herstellbar ist.

Ferner soll ein Verfahren der eingangs genannten Art angegeben werden, mit welchem größere Energiemengen übertragbar bzw. ein höherer Temperaturgradient herstellbar ist. Weiter soll ein Verfahren zum besonders effizienten Übertragen von elektrischer Energie angegeben werden.

Die erste Aufgabe wird durch eine Vorrichtung der eingangs genannten Art gelöst, bei welcher die erste Begrenzungsfläche zumindest eine als Spitze ausgebildete Feldüberhöhungseinrichtung aufweist, sodass, wenn an den Elektroden eine elektrische Spannung anliegt, eine Feldstärke des elektrischen Feldes in einem Bereich der Feldüberhöhungseinrichtung höher ist als eine mittlere Feldstärke des elektrischen Feldes im Arbeitsraum.

Im Rahmen der Erfindung wurde erkannt, dass eine verbesserte Energieübertragung und somit die Bildung eines größeren Temperaturgradienten erreicht werden kann, wenn nicht nur eine natürliche Molekularbewegung der Moleküle ausgenutzt wird, sondern Moleküle des im Arbeitsraum befindlichen Gases ionisiert werden, sodass die ionisierten Moleküle im elektrischen Feld durch das elektrische Feld beschleunigt werden. Die Ionisierung des Arbeitsgases erfolgt dabei an der üblicherweise als Spitze ausgebildeten Feldüberhöhungseinrichtung, an welcher eine Feldstärke höher ist als eine mittlere Feldstärke des elektrischen Feldes im Arbeitsraum, welcher in der Regel als zwischen Platten, welche die Begrenzungsflächen aufweisen, angeordneter Hohlraum ausgebildet ist.

Zum Bilden des Temperaturgradienten werden die an der Feldüberhöhungseinrichtung ionisierten Moleküle somit durch die auf die ionisierten Moleküle im elektrischen Feld wirkende Kraft zur zweiten Begrenzungsfläche beschleunigt, an welcher die Moleküle Energie abgeben, wonach die Moleküle von der zweiten Begrenzungsfläche reflektiert werden. Anschließend bewegen sich die Moleküle in Richtung der ersten Begrenzungsfläche, wobei die Moleküle bei der Bewegung gegen das elektrische Feld Energie verlieren und dabei abkühlen, sodass diese an der ersten Begrenzungsfläche Energie aufnehmen können, wobei die erste Begrenzungsfläche abkühlt. In weiterer Folge werden die Moleküle durch das elektrische Feld zur zweiten Begrenzungsfläche beschleunigt, an welcher diese Energie an die zweite Begrenzungsfläche abgeben, wobei die zweite Begrenzungsfläche erwärmt wird. Bei einer dieser Bewegungen kommt das Molekül statistisch wieder in den Bereich der Feldüberhöhungseinrichtung, sodass die Ionisierung der Moleküle aufrechterhalten wird.

Wenn beispielsweise die erste Elektrode gegenüber der zweiten Elektrode positiv geladen ist, wird an der Feldüberhöhungseinrichtung aus einem sich im Bereich der Feldüberhöhungseinrichtung befindlichen Molekül ein Elektron durch die hohe Feldstärke im Bereich der Feldüberhöhungseinrichtung entfernt, sodass aus dem zuvor nicht geladenen Molekül ein positiv geladenes Ion, ein sogenanntes Kation, wird. Dieses ionisierte Molekül wird durch das elektrische Feld zur negativ geladenen zweiten Begrenzungsfläche beschleunigt, an welcher das Molekül Energie abgeben kann, wonach es zur ersten Begrenzungsfläche reflektiert wird, an welcher das Molekül Energie aufnimmt. Auf diese Weise kann Energie von der ersten Begrenzungsfläche zur zweiten Begrenzungsfläche übertragen werden, wobei die zweite Begrenzungsfläche eine höhere Temperatur als die erste Begrenzungsfläche aufweist bzw. wärmer ist, sodass sich ein Temperaturgradient zwischen der zweiten Begrenzungsfläche und der ersten Begrenzungsfläche einstellt.

Erfindungsgemäß ist eine elektrische Feldstärke an der Feldüberhöhungseinrichtung zumindest um den Faktor 10, vorzugsweise um den Faktor 100, insbesondere um den Faktor 1000, höher als eine mittlere elektrische Feldstärke im Arbeitsraum. Dadurch werden Moleküle des Arbeitsgases nur an der oder den Feldüberhöhungseinrichtungen der ersten Begrenzungsflächen ionisiert, während im restlichen Teil des Arbeitsraumes ein im Wesentlichen homogenes elektrisches Feld vorherrscht.

Üblicherweise ist die Feldüberhöhungseinrichtung zumindest endseitig etwa kegelförmig ausgebildet und weist einen Kegelwinkel von vorzugsweise weniger als 30° auf. Dadurch wird eine besonders günstige Feldüberhebung erreicht. In der Regel ist die Feldüberhöhungseinrichtung von einem ebenen Teil der ersten Begrenzungsfläche ausgehend durchgängig etwa kegelförmig ausgebildet, um eine günstige Ionisierung zu erreichen.

Es hat sich bewährt, dass ein Abstand der Feldüberhöhungseinrichtung von der zweiten Begrenzungsfläche weniger als 90 %, vorzugsweise weniger als 80 %, eines maximalen Begrenzungsflächenabstandes zwischen erster Begrenzungsfläche und zweiter Begrenzungsfläche beträgt. Dadurch wird eine günstige Ionisierung des Arbeitsgases erreicht. Die Feldüberhöhungseinrichtung ragt somit in der Regel zumindest 10 %, vorzugsweise zumindest 20 %, des Begrenzungsflächenabstandes von der ersten Begrenzungsfläche in den Arbeitsraum. Günstig ist es, wenn die Feldüberhöhungseinrichtung weniger als 90 % des Begrenzungsflächenabstandes von der ersten Begrenzungsfläche in den Arbeitsraum ragt. Der Begrenzungsflächenabstand beträgt üblicherweise weniger als 5000 nm, sodass eine Bewegung der Moleküle bzw. Atome zwischen erster Begrenzungsfläche und zweiter Begrenzungsfläche auch aufgrund einer natürlichen Molekularbewegung erfolgen kann.

In der Regel sind mehrere Feldüberhöhungseinrichtungen an der ersten Begrenzungsfläche vorgesehen, normalerweise regelmäßig auf der ersten Begrenzungsfläche verteilt. Ein Abstand zwischen den Feldüberhöhungseinrichtungen beträgt dann üblicherweise 10 % bis 500 % des Begrenzungsflächenabstandes zwischen erster Begrenzungsfläche und zweiter Begrenzungsfläche.

Erfindungsgemäß ist vorgesehen, dass der Arbeitsraum derart ausgebildet ist, dass bei Anliegen einer elektrischen Spannung zwischen den Elektroden ein elektrisches Feld im Arbeitsraum erreicht wird, welches über mehr als 70 % des Arbeitsraumes, insbesondere über mehr als 90 % des Arbeitsraumes, im Wesentlichen homogen ist. Dadurch wird eine günstige Molekularbewegung im Arbeitsraum erreicht.

Eine Übertragung großer Energiemengen auf kleinem Raum ist auf besonders einfache Weise möglich, wenn der Arbeitsraum derart ausgebildet ist, dass bei Anliegen einer elektrischen Spannung ein elektrisches Feld im Arbeitsraum gebildet wird, welches außerhalb eines Bereiches, welcher von der zumindest einen Feldüberhöhungseinrichtung weniger als 1000 nm, insbesondere weniger als 500 nm, vorzugsweise weniger als 200 nm, beabstandet ist, im Wesentlichen homogen ist.

Zur Ionisierung des Arbeitsgases bei gleichzeitig möglichst homogenem elektrischen Feld im Arbeitsraum ist es günstig, wenn die Feldüberhöhungseinrichtung als Spitze ausgebildet ist und an einem Ende eine Fläche von weniger als 10 nm², insbesondere weniger als 5 nm², aufweist. Diese Fläche der Feldüberhöhungseinrichtung ist üblicherweise etwa parallel zur ersten Begrenzungsfläche angeordnet. Dadurch kann auch mit einer geringen Anzahl von Feldüberhöhungseinrichtungen eine vorteilhafte Ionisierung erreicht werden. Weniger Spitzen im Arbeitsraum sind vorteilhaft, um eine günstige Energieübertragung zwischen erster Begrenzungsfläche und zweiter Begrenzungsfläche zu erreichen. Je mehr Spitzen eingesetzt werden, umso besser können Moleküle des Arbeitsgases ionisiert werden. Mit einer entsprechend ausgebildeten Feldüberhöhungseinrichtung wird somit gleichzeitig eine gute Energieübertragung und Gasionisierung erreicht.

Eine kompakte Bauform der Vorrichtung bei gleichzeitig hoher Effektivität wird erreicht, wenn die erste Begrenzungsfläche und die zweite Begrenzungsfläche im Wesentlichen eben ausgebildet sind. Üblicherweise ist die erste Begrenzungsfläche mit Ausnahme der aus dieser ragenden Feldüberhöhungseinrichtungen vollständig eben und die zweite Begrenzungsfläche gänzlich eben ausgebildet.

Um Energie zwischen den Begrenzungsflächen auf effektive Weise übertragen zu können, ist es günstig, wenn im Arbeitsraum ein Gas angeordnet ist, welches eine freie Weglänge von weniger 5000 nm, insbesondere weniger als 1000 nm, vorzugsweise etwa 500 nm, aufweist. Dadurch kollidieren Moleküle im Arbeitsraum bei einer Bewegung zwischen den Begrenzungsflächen nur sehr selten mit anderen Molekülen, sodass ein Energieaustausch zwischen Molekülen im Arbeitsraum nur sehr eingeschränkt möglich ist, wodurch Energie zwischen den Begrenzungflächen und nicht bzw. nur sehr eingeschränkt zwischen Atomen bzw. Molekülen des Arbeitsgases erfolgt.

Üblicherweise ist im Arbeitsraum ein Gas mit geringer Ionisierungsenergie, insbesondere Argon, Xenon, C₆₀, C₆₀F₆₀, Iod, SF₆ oder UF₆, angeordnet. Derartige Gase haben sich bewährt, weil diese einfach ionisierbar sind und eine für eine Übertragung von Energie günstige Masse aufweisen.

In der Regel ist die Vorrichtung derart ausgebildet, dass an der Spitze eine Feldstärke erreicht wird, welche gerade zur Ionisierung des eingesetzten Arbeitsgases ausreicht, um ein möglichst homogenes elektrisches Feld im Arbeitsraum und gleichzeitig ein Ionisieren des Gases zu erreichen.

Günstig ist es, wenn im Arbeitsraum ein Elektronengas angeordnet ist. Dies kann beispielsweise erreicht werden, wenn die erste Elektrode negativ gegenüber der zweiten Elektrode geladen ist, sodass an der Feldüberhöhungseinrichtung Elektronen austreten. Diese das Elektronengas bildenden Elektronen können dann zum Übertragen elektrischer Energie mit besonders geringem Widerstand eingesetzt werden, sodass die Vorrichtung als Supraleiter eingesetzt werden kann. Durch die Feldüberhöhungseinrichtungen wird das Elektronengas auch dann aufrechterhalten, wenn einzelne Elektronen den Arbeitsraum durch die zweite Begrenzungsfläche verlassen. Es versteht sich, dass ein Stromfluss dann in einer Richtung bzw. einer Ebene erfolgt, welche etwa unter 90° bzw. normal auf einen Normalabstand zwischen der ersten Begrenzungsfläche und der zweiten Begrenzungsfläche ist.

Es hat sich bewährt, dass im Arbeitsraum ein auf einfache Art und Weise ionisierbares Gas, insbesondere Lithium, Natrium, Kalium, Rubidium und/oder Cäsium, angeordnet ist, bevorzugt in einem Plasmazustand. Ein entsprechendes Plasma kann ebenfalls zur Übertragung elektrischer Energie bzw. zur Leitung eines elektrischen Stromes mit besonders geringem elektrischen Widerstand genutzt werden, sodass mit einem entsprechenden Plasma, welches mit einer erfindungsgemäßen Vorrichtung auch bei einer Temperatur von weniger als 100° C, insbesondere bei Raumtemperatur, aufrechterhalten werden kann, die Vorrichtung als Supraleiter eingesetzt werden kann. Auch hier erfolgt ein Stromfluss in einer Stromflussrichtung quer zu einem Normalabstand zwischen den Begrenzungsflächen. Für die Bereitstellung eines entsprechenden Plasmas im Arbeitsraum ist es günstig, wenn die erste Elektrode positiv gegenüber der zweiten Elektrode geladen ist, sodass an einer Feldüberhöhungseinrichtung, welche üblicherweise als Spitze ausgebildet ist, ein Molekül, beispielsweise ein Cäsiummolekül, ein Elektron an die Feldüberhöhungseinrichtung abgeben kann, sodass das Cäsiummolekül positiv geladen wird und zur Leitung elektrischer Energie zur Verfügung steht. Durch die Feldüberhöhungseinrichtungen erfolgt somit eine positive Ladung der im Arbeitsraum angeordneten Moleküle, insbesondere von Cäsiummolekülen, sodass diese dann zur Leitung von elektrischem Strom verfügbar sind. Weiter wird durch die Feldüberhöhungseinrichtungen eine positive Ladung der Moleküle im Arbeitsraum bzw. das Plasma aufrechterhalten, selbst wenn durch die zweite Begrenzungsfläche Elektronen in den Arbeitsraum gelangen und einzelne Moleküle neutralisieren. Dadurch bleibt die Leitfähigkeit des Plasmas erhalten.

Zur Aufrechterhaltung eines zur Übertragung elektrischer Energie im Arbeitsraum in einer Richtung quer zu einem Normalabstand zwischen den Begrenzungsflächen geeigneten Plasmas oder Elektronengases ist es besonders günstig, wenn die Feldüberhöhungseinrichtungen Spitzen mit einem Spitzenradium von weniger als 50 nm, vorzugsweise weniger als 20 nm, insbesondere etwa 12 nm, aufweisen und die Spitzen der Feldüberhöhungseinrichtungen weniger als 1000 nm, insbesondere etwa 450 nm, von der ersten Begrenzungsfläche beabstandet sind. Für die Bereitstellung eines entsprechenden Plasmas kann dann eine am Arbeitsraum anliegende Spannung von 10 Volt und zur Bereitstellung eines entsprechenden Elektronengases eine am Arbeitsraum anliegende Spannung von 1 Volt ausreichend sein. Ein Partialdruck der Neutralteilchen im Arbeitsraum kann hierzu beispielsweise 10⁻⁸ bar bis 10⁻⁵ bar betragen. Als Neutralteilchen werden hier jene Moleküle bezeichnet, welche noch nicht ionisiert sind. Ein Gesamtdruck im Arbeitsraum kann beispielsweise 10⁻³ bar betragen.

Mit einem im Arbeitsraum angeordneten Plasma oder einem entsprechend gebildeten Elektronengas kann ein elektrischer Leiter in einer Richtung quer zum Normalabstand zwischen den Begrenzungsflächen gebildet werden, bei welchem ein elektrischer Leitwert um einen Faktor von etwa zehntausend höher ist als bei einem Metall. Leitungsverluste können damit um den Faktor 10⁵ reduziert werden. Da zur Aufrechterhaltung dieser Leitfähigkeit die Aufrechterhaltung des Plasmas oder des Elektronengases erforderlich ist, kann die Leitfähigkeit durch Anlegen der elektrischen Spannung zwischen den Elektroden einfach ein- bzw. ausgeschaltet werden. So wird durch die an den Feldüberhöhungseinrichtungen ein- bzw. austretenden Elektronen jeweils ein Leckstrom durch die zweite Begrenzungsfläche ausgeglichen, welcher Leckstrom andernfalls zur Neutralisierung des Arbeitsraumes bzw. zur Neutralisierung der Moleküle des Arbeitsraumes führen würde, sodass keine Leitfähigkeit mehr gegeben wäre. Die erfindungsgemäße Vorrichtung kann somit als elektrisch schaltbarer Supraleiter bei Raumtemperatur eingesetzt werden, mit welchem elektrische Energie gegebenenfalls auch über weite Strecken mit besonders geringen Verlusten übertragbar ist.

Um das Verfahren mit besonders geringem Energieaufwand betreiben zu können, ist es vorteilhaft, wenn die zweite Begrenzungsfläche durch ein Dielektrikum, insbesondere Glas, gebildet ist. Dadurch wird ein Diffundieren von Elektronen zwischen zweiter Elektrode und Arbeitsraum verringert bzw. verhindert.

Mit Vorteil ist die zweite Begrenzungsfläche ausschließlich über ein Dielektrikum mit der zweiten Elektrode verbunden. Dadurch wird ein Stromfluss zwischen den Elektroden, welche üblicherweise flächig und aus Metall gebildet sind, im Wesentlichen vermieden, durch welchen die ionisierten Moleküle wieder in einen ungeladenen Zustand versetzt werden könnten. Somit ist ein Ionisieren von Molekülen an den Spitzen nur dann erforderlich, wenn Elektronen von der zweiten Elektrode durch das Dielektrikum in den Arbeitsraum diffundieren bzw. bei umgekehrter Polarität Elektronen vom Arbeitsraum durch das Dielektrikum zur zweiten Elektrode diffundieren und die Moleküle wieder in einen ungeladenen Zustand versetzen.

Um an der Spitze eine vorteilhafte Überhöhung des elektrischen Feldes gegenüber der mittleren Feldstärke des elektrischen Feldes im Arbeitsraum zu erreichen, ist es vorteilhaft, wenn die zumindest eine Feldüberhöhungseinrichtung elektrisch leitend mit der ersten Elektrode verbunden ist. Dadurch können Moleküle im Bereich der Spitze auf einfache Weise Elektronen aufnehmen bzw. je nach Polarität der ersten Begrenzungsfläche in der zweiten Begrenzungsfläche abgeben, um eine einfache Ionisierung des Arbeitsgases zu erreichen. Hierzu kann die erste Begrenzungsfläche durchgehend aus einem Metall ausgebildet und über ein Metall mit der ersten Elektrode verbunden sein. Die erste Elektrode und die zweite Elektrode sind in der Regel flächig und etwa parallel zur ersten Begrenzungsfläche und zur zweiten Begrenzungsfläche ausgebildet.

Die weitere Aufgabe wird erfindungsgemäß durch ein Verfahren der eingangs genannten Art gelöst, bei welchem Moleküle des Arbeitsgases im Arbeitsraum an einer an der ersten Begrenzungsfläche angeordneten Feldüberhöhungseinrichtung ionisiert werden, wonach die ionisierten Moleküle unter Erwärmung derselben durch das elektrische Feld zur zweiten Begrenzungsfläche bewegt werden, an welcher die Moleküle Energie abgeben, wonach die Moleküle unter Abkühlung derselben zur ersten Begrenzungsfläche bewegt werden, wonach die Moleküle an der ersten Begrenzungsfläche Energie aufnehmen. Durch Einsatz ionisierter Moleküle bzw. Atome in einem elektrischen Feld können vergleichsweise große Energiemengen zwischen erster Begrenzungsfläche und zweiter Begrenzungsfläche übertragen werden, obwohl die erste Begrenzungsfläche eine geringere Temperatur als die zweite Begrenzungsfläche aufweist. Somit kann mit dem erfindungsgemäßen Verfahren thermische Energie von einem kälteren auf einen wärmeren Körper übertragen werden.

Es versteht sich, dass hier die Bezeichnungen Moleküle und Atome synonym verwendet werden. Für die Wirkung des erfindungsgemäßen Verfahrens ist die Polarität des angelegten elektrischen Feldes nicht relevant. Unabhängig davon, ob die erste Begrenzungsfläche als Anode oder als Kathode bzw. ob die zweite Begrenzungsfläche als Kathode oder Anode wirkt, ergibt sich bei Anliegen einer elektrischen Spannung zwischen den Elektroden ein Temperaturgradient zwischen erster Begrenzungsfläche und zweiter Begrenzungsfläche, wobei die zweite Begrenzungsfläche in der Regel wärmer als die erste Begrenzungsfläche ist.

Üblicherweise wird das Verfahren im Wesentlichen ohne Energiezufuhr durchgeführt. Dadurch ist die Herstellung eines Temperaturgradienten auf künstliche Weise gänzlich ohne Energiezufuhr möglich, sodass das erfindungsgemäße Verfahren beispielsweise zum Betrieb eines Kühlschrankes oder zur Gewinnung elektrischer Energie aus einem Temperaturgradienten wie im Dokument AT 514110 A1 beschrieben eingesetzt werden kann.

Die weitere Aufgabe wird erfindungsgemäß durch ein Verfahren zum Übertragen elektrischer Energie gelöst, bei welchem an einen Arbeitsraum einer Vorrichtung, welche einen gasdichten Arbeitsraum mit einer ersten Begrenzungsfläche, an welcher Feldüberhöhungseinrichtungen angeordnet sind, und einer zweiten Begrenzungsfläche, einer erfindungsgemäßen Vorrichtung, eine elektrische Spannung angelegt wird, wonach im Arbeitsraum mittels eines elektrischen Feldes ein Plasma oder ein Elektronengas gebildet wird, wonach elektrische Energie durch das Plasma oder durch das Elektronengas entlang einer Richtung transportiert wird.

Es hat sich gezeigt, dass mit einer erfindungsgemäßen Vorrichtung auf besonders einfache Weise je nach Polarisation der an den Arbeitsraum angelegten Spannung ein entsprechendes Plasma oder Elektronengas im Arbeitsraum gebildet werden kann, mit welchem elektrische Energie besonders verlustarm transportierbar ist.

In der Regel wird ein Lithium, Natrium, Kalium, Rubidium und/oder Cäsium enthaltendes Plasma bei einem Druck von 10⁻⁸ bar bis 10⁻⁵ bar und 20 °C bis 100 °C bei einer am Arbeitsraum zwischen den Begrenzungsflächen anliegenden Spannung von 0,1 Volt bis 100 Volt, insbesondere etwa 10 Volt, eingesetzt, sodass eine Supraleitung bei Raumtemperatur erreicht wird. Es versteht sich, dass der Stromfluss mit besonders geringem Widerstand durch das Plasma oder das Elektronengas quer zu einem Normalabstand zwischen den Begrenzungsflächen erfolgt, üblicherweise in einer Ebene, welche etwa normal auf einen Normalabstand zwischen den Begrenzungsflächen ausgerichtet ist. Das Plasma oder Elektronengas bilden somit eine Leitungsschicht im Arbeitsraum mit besonders hoher Leitfähigkeit.

Es hat sich bewährt, dass die erfindungsgemäße Vorrichtung als elektrischer Leiter verwendet wird, insbesondere als Supraleiter. Üblicherweise erfolgt dabei ein Stromfluss in einer Ebene, welche etwa normal zu einem Normalabstand zwischen erster Begrenzungsfläche und zweiter Begrenzungsfläche ist.

Weitere Merkmale, Vorteile und Wirkungen der Erfindung ergeben sich anhand des nachfolgend dargestellten Ausführungsbeispiels. In der Zeichnung, auf welche dabei Bezug genommen wird, zeigt:

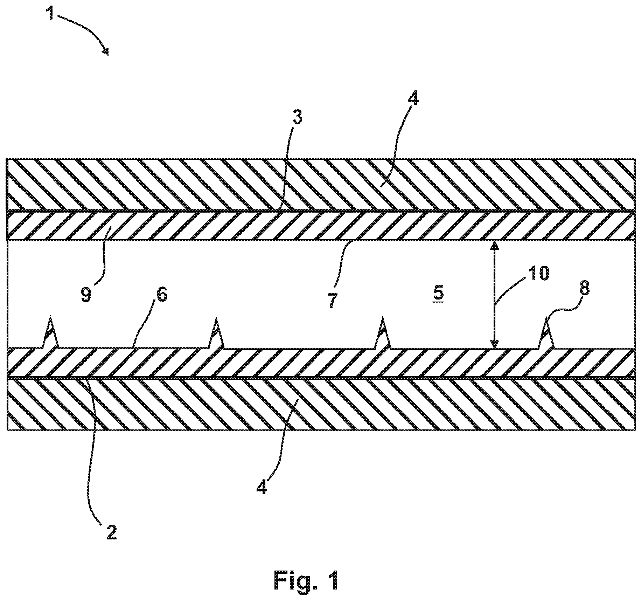

Fig. 1 einen Schnitt durch eine erfindungsgemäße Vorrichtung in schematischer Darstellung.

Fig. 1 zeigt einen Schnitt durch eine erfindungsgemäße Vorrichtung 1 in schematischer Darstellung, wobei ein Arbeitsraum 5 ersichtlich ist, welcher an einer Unterseite von einer ersten Begrenzungsfläche 6 und einer Oberseite von einer zweiten Begrenzungsfläche 7 begrenzt ist. Mit der ersten Begrenzungsfläche 6, welche üblicherweise aus einem Metall besteht, ist eine erste Elektrode 2 elektrisch leitend verbunden.

Die erste Begrenzungsfläche 6 weist als kegelförmige Spitzen 8 ausgebildete Feldüberhöhungseinrichtungen auf, welche wie dargestellt regelmäßig auf der ersten Begrenzungsfläche 6 verteilt angeordnet sind, und zwar üblicherweise auch senkrecht zur dargestellten Schnittebene. Die Spitzen 8 weisen einen Kegelwinkel von weniger als 30° auf, um eine günstige Feldüberhöhung und somit eine vorteilhafte Ionisierung des Arbeitsgases zu erreichen.

Die zweite Begrenzungsfläche 7 ist über ein Dielektrikum wie beispielsweise Glas elektrisch isolierend mit einer zweiten Elektrode 3 verbunden, sodass sich bei Anliegen einer elektrischen Spannung zwischen erster Elektrode 2 und zweiter Elektrode 3 im Arbeitsraum 5 ein elektrisches Feld ergibt, welches im Bereich der Spitzen 8 überhöht ist.

Im Arbeitsraum 5 ist ein leicht ionisierbares Gas wie Argon oder dergleichen eingesetzt, welches derart verdünnt im Arbeitsraum 5 angeordnet ist, dass eine freie Weglänge zwischen Molekülen des Arbeitsgases mehr als ein Begrenzungsflächenabstand 10, welcher als maximaler Abstand zwischen erster Begrenzungsfläche 6 und zweiter Begrenzungsfläche 7 definiert wird, beträgt. Der Begrenzungsflächenabstand 10 beträgt hier weniger als 5000 nm, sodass eine natürliche Molekularbewegung ausgenutzt werden kann, um Energie zwischen erster Begrenzungsfläche 6 und zweiter Begrenzungsfläche 7 zu übertragen. Um einen großen Temperaturgradienten zu bilden, können natürlich mehrere in Fig. 1 schematisch dargestellte Vorrichtungen 1 seriell geschaltet werden. Diese können dann über ein Substrat 4, bevorzugt ein Siliciumsubstrat, verbunden sein, auf welchem die flächig ausgebildeten Elektroden 2, 3 angeordnet sind.

Bei Anliegen einer elektrischen Spannung werden somit Moleküle des Arbeitsgases an den Spitzen 8 ionisiert, an welchen eine elektrische Feldstärke beispielsweise 10⁸ V/m betragen kann, wonach diese Moleküle durch das elektrische Feld zur zweiten Begrenzungsfläche 7 beschleunigt werden. Bei einer Bewegung zur zweiten Begrenzungsfläche 7 nehmen die Moleküle Energie aus dem elektrischen Feld auf, sodass diese erwärmt werden. Bei Aufprall der Moleküle auf der zweiten Begrenzungsfläche 7 geben die Moleküle dann Energie an die zweite Begrenzungsfläche 7 ab, wodurch die zweite Begrenzungsfläche 7 erwärmt wird. Gleichzeitig prallen die Moleküle an der zweiten Begrenzungsfläche 7 ab und werden durch eine natürliche Molekularbewegung im Arbeitsraum 5 bewegt, wobei diese früher oder später in Kontakt mit der ersten Begrenzungsfläche 6 kommen. Bis zu diesem Kontakt verlieren die Moleküle durch Bewegung entgegen das elektrische Feld an Energie, sodass die Moleküle bei der Bewegung abkühlen und bei Erreichen der ersten Begrenzungsfläche 6 kälter sind als bei Abprallen von der zweiten Begrenzungsfläche 7. Die Moleküle können somit an der ersten Begrenzungsfläche 6 Energie von der ersten Begrenzungsfläche 6 aufnehmen, wobei die Moleküle erwärmt werden. Anschließend werden die Moleküle durch das elektrische Feld in Verbindung mit der natürlichen Molekularbewegung zur zweiten Begrenzungsfläche 7 bewegt, an welcher die Moleküle Energie wieder abgeben.

Zwischen der zweiten Elektrode 3 und der zweiten Begrenzungsfläche 7 ist ein Dielektrikum, insbesondere ein Isolator 9 wie Glas angeordnet, sodass ein Stromfluss von der zweiten Elektrode 3 in den Arbeitsraum 5 im Wesentlichen vermieden ist. Ein Durchdiffundieren von Elektronen kann häufig nicht gänzlich vermieden werden. Diffundieren Elektronen von der zweiten Elektrode 3 in den Arbeitsraum 5 oder diffundieren bei umgekehrter Polarität Elektronen vom Arbeitsraum 5 durch die zweite Begrenzungsfläche 7 zur zweiten Elektrode 3, kann dies dazu führen, dass ein Molekül des Arbeitsgases wieder in einen ungeladenen Zustand versetzt wird. Auch ein solches Molekül kontaktiert jedoch durch die natürliche Molekularbewegung früher oder später wieder einen Bereich der Spitzen 8, sodass auch die durch ein Diffundieren von Elektronen entladenen Moleküle ionisiert werden, um das Verfahren aufrechtzuerhalten. Im Wesentlichen kann mit dem Verfahren somit ohne Zufuhr äußerer Energie thermische Energie von der kälteren ersten Begrenzungsfläche 6 zur wärmeren zweiten Begrenzungsfläche 7 übertragen werden.

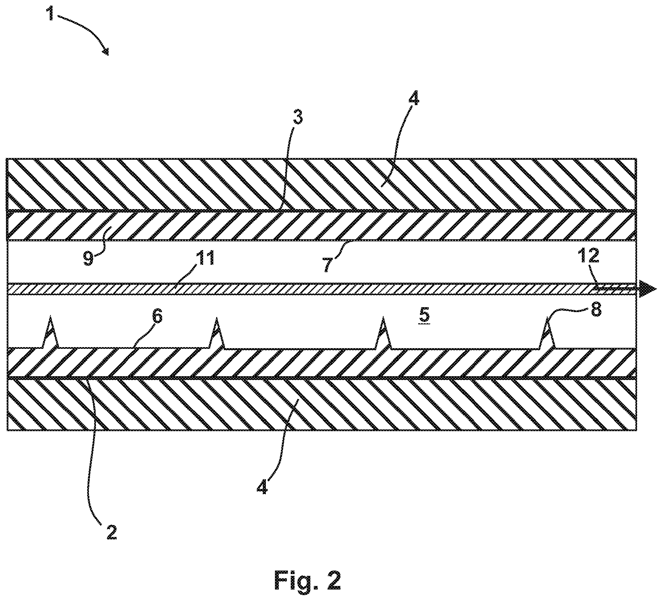

Fig. 2 zeigt eine erfindungsgemäße Vorrichtung 1, welche als Supraleiter eingesetzt wird. Wie ersichtlich ist dabei zwischen den Begrenzungsflächen 6, 7 eine Leitungsschicht 11 gebildet. Diese Leitungsschicht 11 kann durch ein Plasma, insbesondere ein Lithium, Natrium, Kalium, Rubidium und/oder Cäsium enthaltendes Plasma bei einem Partialdruck von 10⁻⁸ bar bis 10⁻⁵ bar und 20 °C bis 100 °C, oder ein Elektronengas gebildet werden.

Wird die Leitungsschicht 11 durch ein Elektronengas gebildet, ist die erste Elektrode 2 bzw. die erste Begrenzungsfläche 6 üblicherweise negativ gegenüber der zweiten Begrenzungsfläche 7 geladen. Ein Leckstrom an Elektronen, welcher durch die zweite Begrenzungsfläche 7 aus dem Arbeitsraum 5 austritt, wird dann durch aus den Feldüberhöhungseinrichtungen austretende Elektronen ausgeglichen. Die Feldüberhöhungseinrichtungen weisen dann üblicherweise Spitzen 8 mit einem Spitzenradius von weniger als 50 nm, insbesondere etwa 1 nm bis 12 nm, auf und eine Spannung zwischen der zweiten Begrenzungsfläche 7 und der ersten Begrenzungsfläche 6 beträgt dann beispielsweise etwa 1 Volt. Wenn die Leitungsschicht 11 als Elektronengas ausgebildet ist, ist der Arbeitsraum 5 üblicherweise vollständig evakuiert bzw. befindet sich im Arbeitsraum 5 ein Vakuum.

Wird die Leitungsschicht 11 durch ein Plasma gebildet, ist die erste Elektrode 2 bzw. die erste Begrenzungsfläche 6 und somit auch die Feldüberhöhungseinrichtungen üblicherweise positiv gegenüber der zweiten Begrenzungsfläche 7 geladen. Ein Leckstrom an Elektronen, welcher durch die zweite Begrenzungsfläche 7 in den Arbeitsraum 5 eintritt, wird dann durch in die Feldüberhöhungseinrichtungen eintretende Elektronen ausgeglichen. Die Feldüberhöhungseinrichtungen weisen dann üblicherweise Spitzen 8 mit einem Spitzenradius von weniger als 50 nm, insbesondere etwa 1 nm bis 12 nm, auf und eine Spannung zwischen der ersten Begrenzungsfläche 6 und der zweiten Begrenzungsfläche 7 beträgt dann beispielsweise etwa 10 Volt. Wenn die Leitungsschicht 11 als Plasma ausgebildet ist, herrscht im Arbeitsraum 5 üblicherweise ein Gesamtdruck von etwa 10⁻³ bar und ein Partialdruck von Neutralteilchen von 10⁻⁸ bar bis 10⁻⁵ bar.

Eine Übertragung elektrischer Leistung erfolgt bei der in Fig. 2 dargestellten Ausführung entlang der Leitungsschicht 11, welche etwa in einer Ebene verläuft, welche etwa normal auf einen Normalabstand zwischen erster Begrenzungsfläche 6 und zweiter Begrenzungsfläche 7 ausgerichtet ist, beispielsweise in der in Fig. 2 dargestellten Stromflussrichtung 12. Ein durch die erfindungsgemäße Vorrichtung 1 gebildeter Supraleiter kann dann mit beliebiger Länge entlang der Leitungsschicht 11 und gleichzeitig einer geringen Erstreckung normal zu der in Fig. 1 und Fig. 2 dargestellten Bildebene ausgebildet sein, sodass lange und dünne Leitungen gebildet werden können. Ein entsprechender Supraleiter kann durch Anlegen einer Spannung zwischen den Begrenzungsflächen 6, 7 auf einfache Weise ein- und ausgeschaltet werden, weist die supraleitenden Eigenschaften bereits bei Raumtemperatur von ca. 20 °C auf und kann sowohl zum Übertragen großer als auch zum Übertragen kleiner Leistungen eingesetzt werden, beispielsweise in der Starkstromtechnik und in der Mikroelektronik. Aufgrund der Ein- und Ausschaltbarkeit der Leitfähigkeit kann die Vorrichtung 1 dann auch als elektronischer Leistungsschalter ohne mechanisch bewegbare Komponenten ausgebildet sein.

Es versteht sich, dass die Zeichnungen als schematische Darstellungen zu verstehen sind. So kann die erste Begrenzungsfläche 6 auch aus demselben Material wie die erste Elektrode 2 gebildet sein bzw. mit der ersten Elektrode 2 zusammenfallen. Entsprechend können auch die Spitzen 8 aus demselben Material wie die erste Elektrode 2 gebildet sein. Die Leitungsschicht 11 kann zwar als dünne Schicht wie dargestellt ausgebildet sein, kann sich jedoch auch bis zur zweiten Begrenzungsfläche 7 und/oder bis nahe an die erste Begrenzungsfläche 6 erstrecken.

Mit einer erfindungsgemäßen Vorrichtung 1 ist die Herstellung eines künstlichen Temperaturgradienten auf besonders energiesparende Weise und kleinem Raum möglich. Dabei können verglichen mit Verfahren des Standes der Technik wesentliche größere Energiemengen übertragen und größere Temperaturgradienten hergestellt werden.

## Patentansprüche

1. Vorrichtung (1) zum Bilden eines Temperaturgradienten, aufweisend zumindest einen gasdichten Arbeitsraum (5) mit einer ersten Begrenzungsfläche (6), welche mit einer ersten Elektrode (2) verbunden ist, und einer zweiten Begrenzungsfläche (7), welche mit einer zweiten Elektrode (3) verbunden ist, wobei bei Anlegen einer elektrischen Spannung zwischen erster Elektrode (2) und zweiter Elektrode (3) im Arbeitsraum (5) ein elektrisches Feld zwischen erster Begrenzungsfläche (6) und zweiter Begrenzungsfläche (7) erzeugbar ist und wobei ein Abstand zwischen erster Begrenzungsfläche (6) und zweiter Begrenzungsfläche (7) kleiner als 5000 nm ist, **dadurch gekennzeichnet, dass** der Arbeitsraum (5) derart ausgebildet ist, dass bei Anliegen einer elektrischen Spannung zwischen den Elektroden (2, 3) ein elektrisches Feld im Arbeitsraum (5) erreicht wird, welches über mehr als 70 % des Arbeitsraumes (5) im Wesentlichen homogen ist, wobei die erste Begrenzungsfläche (6) zumindest eine als Spitze (8) ausgebildete Feldüberhöhungseinrichtung aufweist, sodass, wenn an den Elektroden (2, 3) eine elektrische Spannung anliegt, eine Feldstärke des elektrischen Feldes in einem Bereich der Feldüberhöhungseinrichtung zumindest um den Faktor 10 höher ist als eine mittlere Feldstärke des elektrischen Feldes im Arbeitsraum (5).

2. Vorrichtung (1) nach Anspruch 1, **dadurch gekennzeichnet, dass** die Feldüberhöhungseinrichtung zumindest endseitig etwa kegelförmig ausgebildet ist und einen Kegelwinkel von weniger als 30° aufweist.

3. Vorrichtung (1) nach Anspruch 1 oder 2, **dadurch gekennzeichnet, dass** ein Abstand der Feldüberhöhungseinrichtung von der zweiten Begrenzungsfläche (7) weniger als 90 %, vorzugsweise weniger als 80 %, eines maximalen Begrenzungsflächenabstandes (10) zwischen erster Begrenzungsfläche (6) und zweiter Begrenzungsfläche (7) beträgt.

4. Vorrichtung (1) nach einem der Ansprüche 1 bis 3, **dadurch gekennzeichnet, dass** der Arbeitsraum (5) derart ausgebildet ist, dass bei Anliegen einer elektrischen Spannung zwischen den Elektroden (2, 3) ein elektrisches Feld im Arbeitsraum (5) erreicht wird, welches über mehr als 90 % des Arbeitsraumes (5) im Wesentlichen homogen ist.

5. Vorrichtung (1) nach einem der Ansprüche 1 bis 4, **dadurch gekennzeichnet, dass** die Feldüberhöhungseinrichtung an einem Ende eine Fläche von weniger als 10 nm², insbesondere weniger als 5 nm², aufweist.

6. Vorrichtung (1) nach einem der Ansprüche 1 bis 5, **dadurch gekennzeichnet, dass** im Arbeitsraum (5) ein Gas angeordnet ist, welches eine freie Weglänge von weniger als 5000 nm, insbesondere weniger als 1000 nm, vorzugsweise etwa 500 nm, aufweist.

7. Vorrichtung (1) nach einem der Ansprüche 1 bis 6, **dadurch gekennzeichnet, dass** im Arbeitsraum (5) ein Elektronengas angeordnet ist.

8. Vorrichtung (1) nach einem der Ansprüche 1 bis 7, **dadurch gekennzeichnet, dass** im Arbeitsraum (5) Lithium, Natrium, Kalium, Rubidium und/oder Cäsium angeordnet ist, bevorzugt in einem Plasmazustand.

9. Vorrichtung (1) nach einem der Ansprüche 1 bis 8, **dadurch gekennzeichnet, dass** die zweite Begrenzungsfläche (7) durch ein Dielektrikum, insbesondere Glas, gebildet ist.

10. Vorrichtung (1) nach einem der Ansprüche 1 bis 9, **dadurch gekennzeichnet, dass** die erste Begrenzungsfläche (6) zumindest eine Spitze (8) aufweist, welche elektrisch leitend mit der ersten Elektrode (2) verbunden ist.

11. Verfahren zum Bilden eines Temperaturgradienten mit einer Vorrichtung (1), welche einen gasdichten Arbeitsraum (5) mit einer ersten Begrenzungsfläche (6) und einer zweiten Begrenzungsfläche (7) aufweist, mittels eines im Arbeitsraum (5) befindlichen Arbeitsgases, an dem ein elektrisches Feld anliegt, wobei die Vorrichtung (1) nach einem der Ansprüche 1 bis 10 ausgebildet ist, wobei Moleküle des Arbeitsgases im Arbeitsraum (5) an einer an der ersten Begrenzungsfläche (6) angeordneten Feldüberhöhungseinrichtung ionisiert werden, wonach die ionisierten Moleküle unter Erwärmung derselben durch das elektrische Feld zur zweiten Begrenzungsfläche (7) bewegt werden, an welcher die Moleküle Energie abgeben, wonach die Moleküle unter Abkühlung derselben zur ersten Begrenzungsfläche (6) bewegt werden, wonach die Moleküle an der ersten Begrenzungsfläche (6) Energie aufnehmen.

12. Verfahren nach Anspruch 11, **dadurch gekennzeichnet, dass** das Verfahren im Wesentlichen ohne Energiezufuhr durchgeführt wird.

13. Verfahren zum Übertragen elektrischer Energie, **dadurch gekennzeichnet, dass** an einen Arbeitsraum (5) einer Vorrichtung (1), welche einen gasdichten Arbeitsraum (5) mit einer ersten Begrenzungsfläche (6), an welcher Feldüberhöhungseinrichtungen angeordnet sind, und einer zweiten Begrenzungsfläche (7) aufweist und nach einem der Ansprüche 1 bis 10 ausgebildet ist, eine elektrische Spannung angelegt wird, wonach im Arbeitsraum (5) mittels eines elektrischen Feldes ein Plasma oder ein Elektronengas gebildet wird, wonach elektrische Energie durch das Plasma oder durch das Elektronengas transportiert wird.

14. Verwendung einer Vorrichtung (1) nach einem der Ansprüche 1 bis 10 als elektrischer Leiter, insbesondere als Supraleiter.

15. Verwendung nach Anspruch 14, **dadurch gekennzeichnet, dass** ein Stromfluss in einer Ebene erfolgt, welche etwa normal zu einem Normalabstand zwischen erster Begrenzungsfläche (6) und zweiter Begrenzungsfläche (7) ist.

## Claims

1. A device (1) for forming a temperature gradient, comprising at least a gas-tight working chamber (5) with a first boundary surface (6), which is connected to a first electrode (2), and the second boundary surface (7), which is connected to a second electrode (3), wherein an electrical field between the first boundary surface (6) and the second boundary surface (7) can be generated in the working chamber (5) when an electrical voltage is applied between first electrode (2) and second electrode (3) and wherein the distance between the first boundary surface (6) and the second boundary surface (7) is less than 5000 nm, **characterised in that** the working chamber (5) is constituted such that an electrical field is created in the working chamber (5) when an electrical voltage is applied between the electrodes (2, 3) which is essentially homogeneous over more than 70% of the working chamber (5), wherein the first boundary surface (6) comprises at least one field elevation device constituted as a peak (8), so that, when electrical voltage is applied at the electrodes (2, 3), a field strength of the electrical field in a region of the field elevation device is higher at least by the factor 10 than an average field strength of the electrical field in the working chamber (5).

2. The device (1) according to claim 1, **characterised in that** the field elevation device is formed roughly conical at least at the end and has a cone angle of less than 30°.

3. The device (1) according to claim 1 or 2, **characterised in that** a distance of the field elevation device from the second boundary surface (7) amounts to less than 90%, preferably less than 80%, of a maximum boundary surface distance (10) between the first boundary surface (6) and the second boundary surface (7).

4. The device (1) according to any one of claims 1 to 3, **characterised in that** the working chamber (5) is constituted in such a way that, when an electric voltage is applied between the electrodes (2, 3) an electrical field is created in the working chamber (5), which is essentially homogeneous over more than 90% of the working chamber (5).

5. The device (1) according to any one of claims 1 to 4, **characterised in that** the field elevation device at one end has an area of less than 10 nm², in particular less than 5 nm².

6. The device (1) according to any one of claims 1 to 5, **characterised in that** a gas is arranged in the working chamber (5), which has a free path length of less than 5000 nm, in particular less than 1000 nm, preferably approximately 500 nm.

7. The device (1) according to any one of claims 1 to 6, **characterised in that** an electron gas is arranged in the working chamber (5).

8. The device (1) according to any one of claims 1 to 7, **characterised in that** lithium, sodium, potassium, rubidium and/or caesium is arranged in the working chamber (5), preferably in a plasma state.

9. The device (1) according to any one of claims 1 to 8, **characterised in that** the second boundary surface (7) is formed by a dielectric, in particular glass.

10. The device (1) according to any one of claims 1 to 9, **characterised in that** the first boundary surface (6) comprises at least one peak (8), which is connected in an electrically conductive manner to the first electrode (2).

11. A method for forming a temperature gradient with a device (1), which comprises a gas-tight working chamber (5) with a first boundary surface (6) and a second boundary surface (7), by means of a working gas present in the working chamber (5) in which an electrical field is present, wherein the device (1) is constituted according to any one of claims 1 to 10, wherein molecules of the working gas in the working chamber (5) are ionised at a field elevation device arranged at the first boundary surface (6), after which the ionised molecules whilst they are heated are moved through the electrical field to the second boundary surface (7), at which the molecules emit energy, after which the molecules whilst they are cooled are moved to the first boundary surface (6), after which the molecules absorb energy at the first boundary surface (6).

12. The method according to claim 11, **characterised in that** the method is carried out essentially without an energy supply.

13. A method for the transmission of electrical energy, **characterised in that** an electrical voltage is applied to a working chamber (5) of a device (1), which comprises a gas-tight working chamber (5) with a first boundary surface (6), at which field elevation devices are arranged, and a second boundary surface (7) and is constituted according to any one of claims 1 to 10, after which a plasma or an electron gas is formed in the working chamber (5) by means of an electrical field, after which electrical energy is transported through the plasma and through electron gas.

14. Use of a device (1) according to any one of claims 1 to 10 as an electrical conductor, in particular as a superconductor.

15. The use according to claim 14, **characterised in that** a current flow takes place in a plane, which is roughly normal to a normal distance between the first boundary surface (6) and the second boundary surface (7).

## Revendications

1. Dispositif (1) destiné à former un gradient de température, comportant au moins un espace de travail étanche aux gaz (5) avec une première surface de délimitation (6), laquelle est reliée à une première électrode (2) et une deuxième surface de délimitation (7), laquelle est reliée à une deuxième électrode (3), sachant que lors de l'application d'une tension électrique entre la première électrode (2) et la deuxième électrode (3) dans l'espace de travail (5), un champ électrique peut être produit entre la première surface de délimitation (6) et la deuxième surface de délimitation (7) et sachant qu'une distance entre la première surface de délimitation (6) et la deuxième surface de délimitation (7) est inférieure à 5000 nm, **caractérisé en ce que** l'espace de travail (5) est constitué de telle manière que lors de l'application d'une tension électrique entre les électrodes (2, 3), un champ électrique est obtenu dans l'espace de travail (5), lequel est pour l'essentiel homogène sur plus de 70 % de l'espace de travail (5), sachant que la première surface de délimitation (6) comporte au moins un dispositif de surélévation de champ constitué sous la forme d'une pointe (8) de telle manière que lorsqu'une tension électrique est appliquée aux électrodes (2, 3), une intensité de champ du champ électrique dans un secteur du dispositif de surélévation de champ est plus élevée d'au moins un facteur 10 qu'une intensité de champ moyenne du champ électrique dans l'espace de travail (5).

2. Dispositif (1) selon la revendication 1, **caractérisé en ce que** le dispositif de surélévation de champ est constitué au moins en extrémité de forme à peu près conique et comporte un angle de cône de moins de 30°.

3. Dispositif (1) selon la revendication 1 ou 2, **caractérisé en ce qu'**une distance du dispositif de surélévation de champ de la deuxième surface de délimitation (7) est de moins de 90 %, de préférence moins de 80 % d'une distance de surface de délimitation (10) maximale entre la première surface de délimitation (6) et la deuxième surface de délimitation (7).

4. Dispositif (1) selon l'une quelconque des revendications 1 à 3, **caractérisé en ce que** l'espace de travail (5) est constitué de telle manière que lors de l'application d'une tension électrique entre les électrodes (2, 3), un champ électrique est obtenu dans l'espace de travail (5), lequel est pour l'essentiel homogène sur plus de 90 % de l'espace de travail (5).

5. Dispositif (1) selon l'une quelconque des revendications 1 à 4, **caractérisé en ce que** le dispositif de surélévation de champ comporte à une extrémité une surface de moins de 10 nm², en particulier de moins de 5 nm².

6. Dispositif (1) selon l'une quelconque des revendications 1 à 5, **caractérisé en ce qu'**un gaz est disposé dans l'espace de travail (5), lequel comporte une longueur de course libre de moins de 5000 nm, en particulier de moins de 1000 nm, de préférence d'environ 500 nm.

7. Dispositif (1) selon l'une quelconque des revendications 1 à 6, **caractérisé en ce qu'**un gaz électronique est disposé dans l'espace de travail (5).

8. Dispositif (1) selon l'une quelconque des revendications 1 à 7, **caractérisé en ce que** du lithium, du sodium, du potassium, du rubidium et/ou du césium est disposé dans l'espace de travail (5), de préférence à un état plasmatique.

9. Dispositif (1) selon l'une quelconque des revendications 1 à 8, **caractérisé en ce que** la deuxième surface de délimitation (7) est formé par un diélectrique, en particulier du verre.

10. Dispositif (1) selon l'une quelconque des revendications 1 à 9, **caractérisé en ce que** la première surface de délimitation (6) comporte au moins une pointe (8), laquelle est reliée de façon électroconductrice à la première électrode (2).

11. Procédé destiné à former un gradient de température avec un dispositif (1), lequel comporte un espace de travail étanche aux gaz (5) avec une première surface de délimitation (6) et une deuxième surface de délimitation (7), auquel est appliqué un champ électrique au moyen d'un gaz de travail se trouvant dans l'espace de travail (5), sachant que le dispositif (1) est constitué selon l'une quelconque des revendications 1 à 10, sachant que des molécules du gaz de travail sont ionisées dans l'espace de travail (5) sur un dispositif de surélévation de champ disposé sur la première surface de délimitation (6), les molécules ionisées étant déplacées par rapport à la deuxième surface de délimitation (7) par réchauffement de celles-ci par le champ électrique sur laquelle les molécules délivrent de l'énergie, les molécules étant déplacées par refroidissement de celles-ci par rapport à la première surface de délimitation (6), les molécules captant de l'énergie sur la première surface de délimitation (6).

12. Procédé selon la revendication 11, **caractérisé en ce que** le procédé est exécuté pour l'essentiel sans apport d'énergie.

13. Procédé destiné à transmettre de l'énergie électrique, **caractérisé en ce qu'**une tension électrique est appliquée à un espace de travail (5) d'un dispositif (1), lequel comporte un espace de travail (5) étanche aux gaz avec une première surface de délimitation (6), sur laquelle sont disposés des dispositifs de surélévation de champ et une deuxième surface de délimitation (7) et est constitué selon l'une quelconque des revendications 1 à 10, un plasma ou un gaz électronique étant formé dans l'espace de travail (5) au moyen d'un champ électrique, l'énergie électrique étant transportée par le plasma ou par le gaz électronique.

14. Utilisation d'un dispositif (1) selon l'une quelconque des revendications 1 à 10 en tant que conducteur électrique, en particulier en tant que supraconducteur.

15. Utilisation selon la revendication 14, **caractérisée en ce qu'**un flux de courant a lieu dans un plan lequel est à peu près normal par rapport à une distance normale entre la première surface de délimitation (6) et la deuxième surface de délimitation (7).
